# EUROPEAN PATENT APPLICATION

(11) **EP 4 644 076 A1**
(43) Date of publication of application: **05.11.2025**
(21) Application number: 24382488.5
(22) Date of filing: 03.05.2024
(51) Int. Cl.: B29B 17/02, B29B 17/04, B29L 31/34

(54) **SEPARATING AND RECYCLING OF A MIX OF PLASTIC AND ELECTRONIC CIRCUIT COMPONENTS**

(71) Applicant: Giesecke+Devrient ePayments GmbH, 81677 München (DE)
(72) Inventor: CONSTANS, Nil, 08820 El Prat de Llobregat (Barcelona) (ES); MOLINA, Carles, 08820 El Prat de Llobregat (Barcelona) (ES); FLORES, Joan Sushil, 08820 El Prat de Llobregat (Barcelona) (ES)
(74) Representative: LKGLOBAL Lorenz & Kopf Patentanwalt Attorney at Law PartG mbB

(57) **Abstract**

A method (200) for separating compounds of a body (100) is described. The body (100) includes at least two different compounds. The two different compounds include a first compound which includes a first plastic material (110a-110d), and a second compound which is an electronic circuit component (120). The method (200) includes the following steps: shredding (210) the body (100) into a plurality of shreds (150); mixing (220) the plurality of shreds (150) and a first solvent (315) to separate the first plastic material from the shreds (150), thereby obtaining a first solution (258) of the first plastic material (252) in the first solvent (315), and a first residue (254); separating (230) the first solution (258) from the first residue (254), wherein the first residue (254) includes the electronic circuit component (120); recovering (240) the first plastic material (252) from the first solution (258); and providing (250) the first plastic material (252) and the first residue (254) for separate processing.

## Description

The description relates to a method for separating compounds of a body which comprises at least a first plastic material and an electronic circuit components. In a non-limiting example, the body is a physical support in accordance with ISO/IEC 7810; such a physical support is a mix of plastic material(s) and electronic circuit components and is generally difficult to recycle.

Recycling and reusing materials of products is an important task. In order to reuse or recycle materials, different compounds used in a product typically need to be separated from one another. This separating of different compounds may be a challenging task and may not always lead to satisfying results because not all different materials can be obtained from a mix of materials without losses.

Generally, the higher the level of integration of different materials in one product is, the lower the material recovery.

However, in order to handle limited resources in a responsible manner and to reduce losses, there may be a need for improving a recycling process, e.g., a recycling process of a mix of plastic and electronic circuit components, for preserving a high standard relating to environment protection.

This is achieved by the method described herein.

According to an aspect, a method for separating compounds of a body is described. The method is applied to a body comprising at least two different compounds, the two different compounds including a first compound which includes a first plastic material, and a second compound which is an electronic circuit component. The method comprises the following steps: shredding the body into a plurality of shreds; mixing the plurality of shreds and a first solvent to separate the first plastic material from the shreds, thereby obtaining a first solution of the first plastic material in the first solvent, and a first residue; separating the first solution from the first residue, wherein the first residue includes the electronic circuit component; recovering the first plastic material from the first solution; and providing the first plastic material and the first residue for separate processing.

In other words, the method is applied to a so-called mixed product which includes different types of materials and allows separating these different types of materials from one another in a manner that each of the materials can be provided in a re-usable manner separated from the other materials. In particular, the method allows separating plastic from electronic circuit components and allows re-using both without wasting one of these materials.

The body referred to in the context of the method includes plastic and electronic circuit components. The plastic may be a mix of multiple different types of plastic, as described below, or the plastic may be a single type of plastic that embeds an electronic circuit component. The electronic circuit component may include metal (e.g., copper, aluminum, gold, and/or other metal material), electric and/or electronic components like passive and active electronic components.

In a first step, the body is shredded into multiple shreds. These shreds are subject to the subsequent steps. Each shred may include two compounds. However, some shreds may include only one compound. The body, which is a mix of different compounds or types of material (plastic and electronic circuit components, for example), is shredded in order to facilitate separating these compounds from each other and recycling the compounds. For this step, the body is physically and/or structurally fragmented into small parts, i.e., the shreds. This may be done by a shredder or a grinder.

After shredding the body, the shreds are mixed with the first solvent, e.g., in a vessel. The shreds and the first solvent may be added to the vessel in any order or at the same time. In other words, the shreds may be added to the first solvent, or the first solvent may be added to the shreds.

This step may include any sub-steps that are necessary to separate the first plastic material from the body. For example, this step may include applying thermal energy and/or mixing and/or applying pressure, etc., in order to facilitate dissolving the first plastic material in the first solvent. This mixing results in a first solution that includes the first plastic material dissolved in the first solvent. As a consequence, the first plastic material is removed from the shreds, and a first residue remains after this step, with the first residue being a solid and non-dissolved residue.

The first solvent is selected to solve the first plastic material. In other words, depending on the first plastic material, at least one suitable first solvent from a plurality of available solvents is selected and used in this step.

After the first solvent has taken up the first plastic material from the shreds, the first solution and the first residue are separated from one another. This allows recovering the first plastic material from the first solution on the one hand, and applying other treatment to the first residue on the other hand.

For example, the first compound, i.e., the first plastic material, is recovered from the first solution by applying thermal energy to remove the first solvent from the first solution, or by precipitating the first compound from the first solution using an antisolvent.

Now, the first plastic material is recovered and can be recycled while the first residue can be subjected to a next step.

The first residue may be a mix of remaining plastic material and electronic circuit components. In this case, one of the remaining plastic materials can be removed in a next step. However, the electronic circuit components are part of the residue in each step, and the different types of plastic material are removed in an iterative manner until only electronic circuit components and other impurities remain unsolved.

This iterative approach allows separating a plastic material from other plastic materials as well as electronic circuit components of the body such that all materials can be re-used.

According to an embodiment, the method further comprises the following steps: mixing the first residue and a second solvent to separate a second plastic material from the first residue, thereby obtaining a second solution of the second plastic material in the second solvent, and a second residue; separating the second solution from the second residue, wherein the second residue includes the electronic circuit component; recovering the second plastic material from the second solution; providing the second plastic material and the second residue for separate processing.

For example, the method described herein is implemented as an iterative method from which at least some steps are repeatedly executed, wherein in each iteration, a different plastic material is separated out from the shreds (in the first iteration) or from the residues from the previous iteration (in the second iteration or any subsequent iteration).

This iterative approach allows, in each iteration, separating individual compounds of a body that is made from different types of plastic (e.g., multiple plastic layers, each of different types of plastic like PVC, PET, PE (LDPE, HDPE), PP, EVOH etc.) and electronic circuit components (metallic and/or electronic components) so that the plastic materials and the metal and/or electronic components can be recycled individually. After separating the different types of plastic (each during one iteration), the metal and/or electronic components (and any impurities) are the residues of the last iteration.

The method may be applied to a body which comprises one plastic material and electronic circuit components, or multiple plastic materials and electronic circuit components.

According to an embodiment, at least some steps of the method, in particular the mixing the residue and a solvent, the separating the solution from the residue, the recovering the plastic material from the solution, and the providing the plastic material and the residue for separate processing, are executed in an iterative manner by mixing the residue of each iteration with another solvent in the mixing-step of the next iteration.

According to an embodiment, the method comprises a number of iterations which corresponds to a number of different plastic materials of the first compound.

The method described herein is preferably carried out in an iterative manner. It should be noted that any details provided herein for the first plastic material, the first solvent, the first solution, and the first residue applies in a similar manner to any subsequent iteration step, i.e., to the second plastic material solved from the first residue by a second solvent to obtain a second solution, separate the second solution from the second residue, recover the second plastic material from the second solution, and provide the second plastic material and the second residue for separate processing, i.e., re-use the second plastic material and provide the second residue to the third iteration step.

The first compound may include multiple layers, each layer including a particular plastic material. The iterations are directed to separating a particular plastic material in each iterative step. Thus, when the first compound comprises a given number of layers of different plastic materials, all plastic materials are separated from each other and from the second compound (electronic circuit components, metal and/or electronic components) after the given number of iterations and the residues after the last iterative step is the electronic circuit components with metal and/or electronic components. After the last iteration, impurities of the body may remain with the electronic circuit component and may be separated out before re-using the electronic circuit components.

While different layers may comprise different plastic materials, it is also conceivable that at least some different layers are made of the same plastic material. Layers made of the same plastic material are separated from the shreds or residue in the same iteration by the solvent used for that particular plastic material.

According to an embodiment, the first plastic material is different from the second plastic material.

The method described herein is particularly useful for separating multiple different plastic materials from each other and from electronic circuit components (like metal and/or electric and/or electronic components) to be able to recycle these compounds individually.

For example, the first plastic material may be one of PVC, PET, PE (LDPE, HDPE), PP, EVOH and the second plastic material may be another one of PVC, PET, PE (LDPE, HDPE), PP, EVOH. It should be noted that the list of plastic materials indicated herein are provided as a non-limiting example and that other plastic materials can also be used.

According to an embodiment, the first solvent is different from the second solvent, the first solvent and the second solvent being selected to solve the first plastic material and the second plastic material, respectively.

In other words, the solvents for each iteration are selected such that a respective plastic material is solved by the solvent used in the particular iteration until all of the respective plastic material is solved.

According to an embodiment, the recovering the first plastic material from the first solution is done by precipitating the plastic material from the first solution.

According to an embodiment, the precipitating is done by thermal treatment of the first solution or by adding an antisolvent to the first solution.

Thermal treatment may include heating or cooling of the first solution. When adding an antisolvent, the solvent and the antisolvent may be separated by distillation or other suitable processes.

Thus, after recovering the first plastic material from the first solution and after separating the antisolvent from the solvent, the solvent may be re-used for the same purpose of solving the corresponding plastic material.

According to an embodiment, at least some of the plurality of shreds comprise at least one plastic material and an electronic circuit component.

The body is mechanically shredded into multiple shreds, i.e., small pieces of material. An electronic circuit which is part of the body prior to the shredding is shredded together with the plastic material and at least some shreds comprise at least one plastic material and a part of the electronic circuit component. In order to recycle the plastic material and the electronic circuit component(s), these are separated from each other by the method described herein.

However, some of the shreds may not comprise electronic circuit components but only plastic material.

According to an embodiment, the body is a multilayer-body with multiple distinct layers, each layer comprising a plastic material.

The body may comprise multiple layers that are connected to one another, e.g. by glueing or laminating multiple layers. Adjacent layers may be made of the same or different plastic material.

According to an embodiment, at least one of the multiple distinct layers comprises two different plastic materials.

While one plastic layer may be composed of a single type of plastic material, it is conceivable that one layer includes two (or more) different plastic materials, depending on the structure and design of the body.

According to an embodiment, the second compound is embedded in one of the multiple distinct layers or between two adjacent layers of the multiple distinct layers.

According to an embodiment, the body is a smart card comprising a plastic support and an electronic circuit including a microprocessor and an antenna.

According to an embodiment, the smart card is a device in accordance with ISO/IEC 7810.

ISO/IEC 7810 is one of a series of standards describing the characteristics of identification cards. This standard provides criteria to which cards shall perform and specifies the requirements for such cards used for international interchange. The method described herein is used for separating materials of such cards and recycling the separated materials. This relates to all versions of the ISO/IEC 7810, and in particular to ISO/IEC 7810:2003 and ISO/IEC 7810:2019.

The subject matter will hereinafter be described in conjunction with the following drawing figures, wherein like numerals denote like elements, and wherein:
Fig. 1 is a schematic representation of a body comprising different compounds;
Fig. 2 is a schematic representation of a method for separating compounds of the body shown in Fig. 1;
Fig. 3 is a schematic representation of the steps of the method of Fig. 2;
Fig. 4 is a schematic representation of multiple iterations of the method shown in Fig. 2 and 3.

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

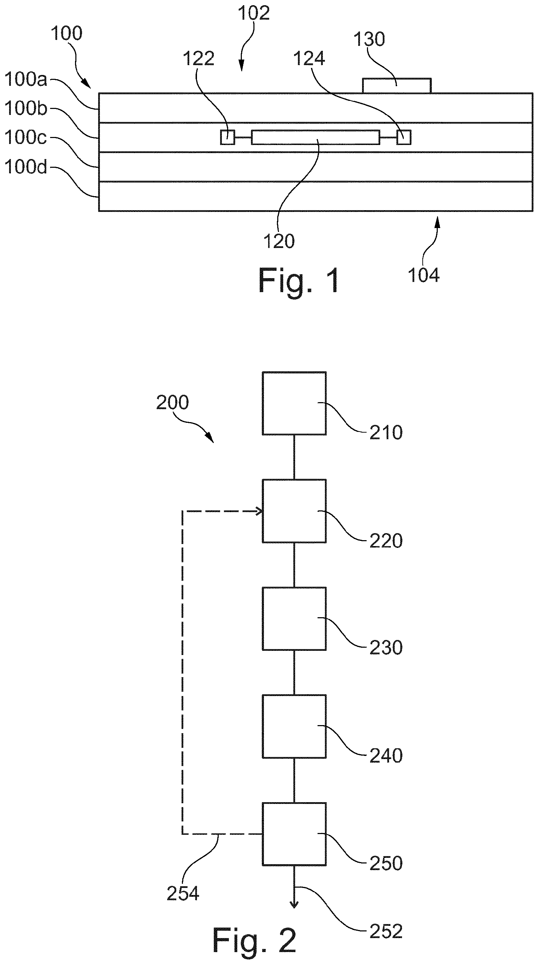

Fig. 1 shows a body 100. The body 100 may be a smart card (bank card, identification card) that is made of plastic material and electronic circuit components embedded in the plastic material. In particular, the body 100 is a device in accordance with ISO/IEC 7810. In other words, the body 100 is a mix of different materials. As described above, in order to improve the recycling process and re-using the materials of the body 100, it is desirable to separate the materials of the body 100 with reduced losses.

The body 100 comprises multiple layers 110a, 110b, 110c, 110d. While the example of Fig. 1 shows four layers, this example shall not be construed in a limiting manner. The body 100 may comprise any number of layers, and the layers may comprise same or different plastic materials. The layers 110a to 110d are laminated together.

The body 100 has an upper surface 102 and a lower surface 104. At least one of the surfaces 102, 104 includes a coating 130. The coating 130 may be an imprint using an ink or any other color to show information to a user of the body 100.

The body 100 comprises an electronic circuit component 120. The electronic circuit component 120 comprises a microprocessor 122 and an antenna 124. In other words, the electronic circuit component 120 comprises metal (an antenna made of copper, for example) and active or passive electric components like a resistor, capacitor, microprocessor, or any other semiconductor components.

The electronic circuit component 120 is embedded in one of the layers 110a to 110d. Alternatively, the electronic circuit component 120 may be located between two adjacent layers 110a to 110d. While Fig. 1 shows a body 100 with multiple layers, the body 100 may include a single plastic layer with the electronic circuit component 120 being embedded in the single plastic layer.

The method described herein is used to separate the materials of the body 100 shown in Fig. 1 and to recycle and reuse the separated materials. This is a particularly challenging task because the body 100 shown in Fig. 1 is a mix of plastic material(s) and electronic circuit components like metal and electronic parts.

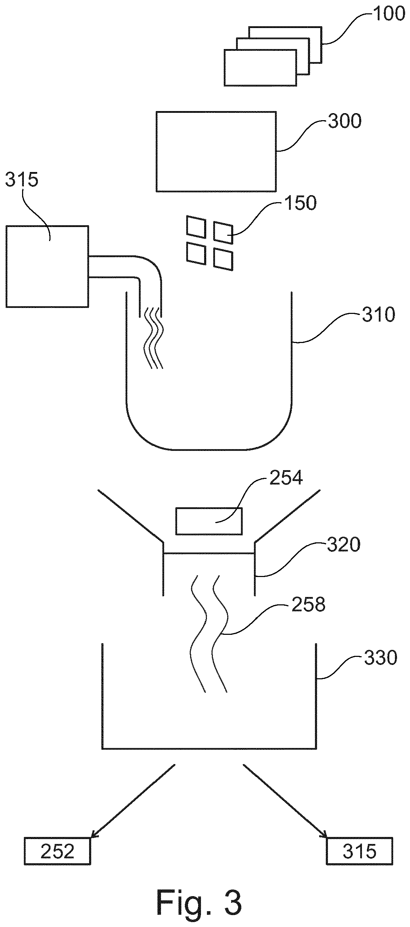

Fig. 2 and 3 schematically show the steps of a method 200 for separating compounds of a body 100 as shown in Fig. 1.

The method 200 is shown with its steps in Fig. 2 while Fig. 3 shows the steps in a more detailed manner. The method 200 includes the following steps:
In a first step 210, one or more bodies 100 are shredded into a plurality of shreds 100. In a second step 220, the plurality of shreds 150 and a first solvent 315 are mixed to separate the first plastic material 252 from the shreds 150, thereby obtaining a first solution 258 of the first plastic material 252 in the first solvent 315, and a first residue 254. In a third step 230, the first solution 258 is separated from the first residue 254, and the first residue 254 includes the electronic circuit component 120. In a fourth step 240, the first plastic material 252 is recovered from the first solution 258. In a fifth step 250, the first plastic material 252 and the first residue 254 are provided for separate processing.

The method may be executed in an iterative manner by iteratively repeating at least some of the steps of the method 200. In Fig. 2, after the step 250, the first residue 254 is used for the next iteration in step 220, by mixing the first residue 254 with a second solvent to separate another plastic material from the first residue. Generally, this iterative approach solves a plastic material from the residue of the preceding iteration, and this is repeated until all plastic material is solved from the residue and only electronic circuit components and impurities remain.

Again with reference to Fig. 3, multiple bodies 100, like smart cards, are physically fragmented by a shredder or grinder 300, thereby providing a plurality of shreds 150 (step 210). The plurality of shreds 150 are inserted in the vessel 310 together with a first solvent 315. Step 220 is carried out by mixing the shreds 150 and the solvent 315 in the vessel 310. Thermal energy may be applied to the vessel 310 when executing step 220. Alternatively or additionally, the shreds 150 and the solvent 315 may be mixed in the vessel 310 by a stirring device (not shown) until the first solvent has solved the first plastic material. Now, the first plastic material is separated from the shreds 150 and the vessel 310 includes a first residue and the first solution, i.e., the shreds 150 are separated into first residue on the one hand and first plastic material in the first solution on the other hand. Typically, the first solvent and the first solution (first solvent plus first plastic material) are in a liquid state.

Having solved the first plastic material from the shreds, the first residue and the first solution can be separated from each other in step 230. This can be done by using a separator or filter 320. The content of the vessel 310 is applied to the separator 320. The separator 320 holds back the first residue 254 and let the first solution 258 pass.

The first residue 254 is used for the second iteration, as described further below. The first solution 258 is applied to a precipitator 330. In the precipitator 330, the first material 252 is precipitated from the first solution 258 and the first solvent 315 can be re-used.

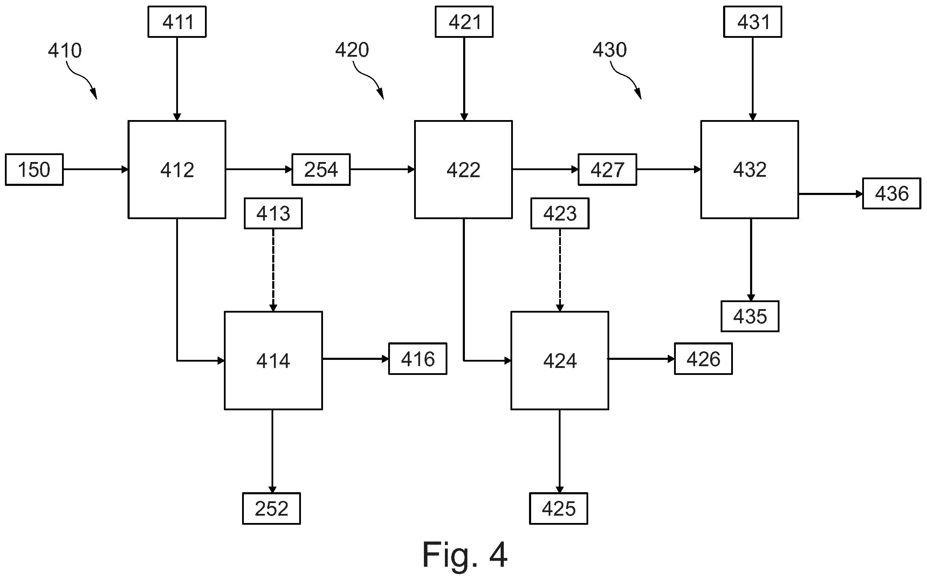

Figs. 2 and 3 show a single iteration of the method. However, the steps described with reference to Figs. 2 and 3 can be repeated multiple times with different solvents to solve different plastic material from the shreds or from the residue of the preceding iteration. The method is shown with multiple iterations in Fig. 4.

Initially, in the first iteration 410, the shreds 150 are mixed with a first solvent 411 to obtain a first solution 412 and a first residue 254. The first solution 412 includes the first solvent 411 and the first plastic material from the shreds 150. This first solution 412 is separated from the first residue 254. At 414, a first antisolvent 413 is added to the first solution 412 to recover the first plastic material 252 from the first solution 412, thereby obtaining a recycled first solvent 416. The first plastic material may be precipitated from the first solution 412 by other techniques and without using an antisolvent. The recycled first solvent 416 may be re-used for solving the same plastic material when executing the same method again.

The first residue 254 is used in the second iteration 420 as an input material. A second solvent 421 is used to solve a second plastic material 425 from the first residue 254, thereby obtaining a second solution 422 (second solvent and second plastic material).

Similar to the first iteration, the second solution 422 is separated from second residue 427. At 424, a second antisolvent 423 is added to the second solution 422 to recover the second plastic material 425 from the second solution 422, thereby obtaining a recycled second solvent 426.

The second residue 427 is used in the third iteration 430 as an input material. A third solvent 431 is used to solve a third plastic material 435 from the second residue 427, thereby obtaining a third solution 432 (third solvent and third plastic material).

Similar to the first and second iterations, the third solution 432 is separated from third residue. A third antisolvent may be added to the third solution 432 to recover the third plastic material 435 from the third solution 432, thereby obtaining a recycled third solvent 436.

The iterations 410, 420, 430 include the same steps. Therefore, the details provided with reference to one of the iterations applies to the other iterations in a corresponding manner. The method 200 may include as many iterations as the number of different plastic materials included in the shreds 150. The residues of each iteration steps are provided as an input material to a subsequent iteration step as long as the residues include a plastic material that can be solved by an appropriate solvent. The method ends when the residue includes electronic circuit components and impurities only.

Thus, the method iterates multiple times and with each iteration step, one recyclable and re-usable material (a certain plastic material for each iteration step, and electronic circuit components including metal and electric parts in the residue of the last iteration) remains.

With the method described herein, the materials of a mixed material structure like a smart card (device of ISO/IEC 7810, like ID1-card, bank card, identification card, etc.) can be separated from each other and re-used, and the material losses of this recycling process are significantly reduced.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of reference signs

- 100: body
- 102: upper surface
- 104: lower surface
- 110a-d: layer
- 120: circuit component
- 122: microprocessor
- 124: antenna
- 130: coating
- 150: shreds
- 200: method
- 210: shredding the body into a plurality of shreds
- 220: mixing the shreds and a first solvent
- 230: separating the first solution from the first residue
- 240: recovering the first plastic material from the first solution
- 250: providing the first plastic material and the first residue for separate processing
- 252: first plastic material
- 254: first residue
- 258: first solution
- 300: shredder
- 310: vessel
- 315: solvent
- 320: separator
- 330: precipitator
- 410: first iteration
- 411: first solvent
- 412: first solution
- 413: first antisolvent
- 414: first solution without first residue
- 416: recycled first solvent
- 421: second solvent
- 422: second solution
- 423: second antisolvent
- 424: second solution without second residue
- 425: second plastic material
- 426: recycled second solvent
- 427: second residue
- 430: third iteration
- 431: third solvent
- 432: third solution
- 435: third plastic material
- 436: recycled third solvent

## Claims

1. A method (200) for separating compounds of a body (100), the body (100) comprising at least two different compounds, the two different compounds including a first compound which includes a first plastic material (110a-110d), and a second compound which is an electronic circuit component (120),
wherein the method (200) comprises:
shredding (210) the body (100) into a plurality of shreds (150);
mixing (220) the plurality of shreds (150) and a first solvent (315) to separate the first plastic material from the shreds (150), thereby obtaining a first solution (258) of the first plastic material (252) in the first solvent (315), and a first residue (254);
separating (230) the first solution (258) from the first residue (254), wherein the first residue (254) includes the electronic circuit component (120);
recovering (240) the first plastic material (252) from the first solution (258);
providing (250) the first plastic material (252) and the first residue (254) for separate processing.

2. The method (200) of claim 1, wherein the method further comprises:
mixing (220) the first residue (254) and a second solvent to separate a second plastic material from the first residue, thereby obtaining a second solution of the second plastic material in the second solvent, and a second residue;
separating (230) the second solution from the second residue, wherein the second residue includes the electronic circuit component;
recovering (240) the second plastic material from the second solution;
providing (250) the second plastic material and the second residue for separate processing.

3. The method (200) of claim 2,
wherein the steps of claim 2 are executed in an iterative manner by mixing the residue of each iteration with another solvent in the mixing-step of the next iteration.

4. The method (200) of claim 3,
wherein the method comprises a number of iterations which corresponds to a number of different plastic materials of the first compound.

5. The method (200) of any one of claims 2 to 4
wherein the first plastic material is different from the second plastic material.

6. The method (200) of any one of claims 2 to 5,
wherein the first solvent is different from the second solvent, the first solvent and the second solvent being selected to solve the first plastic material and the second plastic material, respectively.

7. The method (200) of any one of the preceding claims,
wherein the recovering (240) the first plastic material from the first solution is done by precipitating the plastic material from the first solution.

8. The method (200) of claim 7,
wherein the precipitating is done by thermal treatment of the first solution or by adding an antisolvent to the first solution.

9. The method (200) of any one of the preceding claims,
wherein at least some of the plurality of shreds (150) comprise at least one plastic material and an electronic circuit component.

10. The method (200) of any one of the preceding claims,
wherein the body (100) is a multilayer-body with multiple distinct layers (110a-110d), each layer comprising a plastic material.

11. The method (200) of claim 10,
wherein at least one of the multiple distinct layers (110a-110d) comprises two different plastic materials.

12. The method (200) of claim 10 or 11,
wherein the second compound (120) is embedded in one of the multiple distinct layers (110a-110d) or between two adjacent layers of the multiple distinct layers (110a-110d).

13. The method (200) of any one of the preceding claims,
wherein the body (100) is a smart card comprising a plastic support and an electronic circuit including a microprocessor (122) and an antenna (124).

14. The method (200) of claim 13,
wherein the smart card is a device in accordance with ISO/IEC 7810.
